# EUROPÄISCHE PATENTSCHRIFT

(11) **EP 3 442 839 B1**
(45) Veröffentlichungstag und Bekanntmachung des Hinweises auf die Patenterteilung: **23.06.2021**
(21) Anmeldenummer: 17711166.3
(22) Anmeldetag: 16.03.2017
(51) Int. Cl.: B60T 8/1755, B60W 40/114, B62D 6/00

(54) **VERFAHREN UND VORRICHTUNG ZUM BESTIMMEN EINER SICHERHEITSKRITISCHEN GIERBEWEGUNG EINES FAHRZEUGS**
METHOD AND DEVICE FOR DETERMINING A SAFETY-CRITICAL YAW MOVEMENT OF A VEHICLE
PROCÉDÉ ET DISPOSITIF POUR DÉTERMINER UN MOUVEMENT D'EMBARDÉE D'UN VÉHICULE, CONSTITUANT UN RISQUE POUR LA SÉCURITÉ

(30) Priorität: 12.04.2016 DE 102016206077
(43) Veröffentlichungstag der Anmeldung: 20.02.2019
(73) Patentinhaber: Robert Bosch GmbH, 70442 Stuttgart (DE)
(72) Erfinder: FU, Chengxuan, 73230 Kirchheim (DE); SELVAKUMAR, Solomon Devakiruba, Chennai Tamil Nadu 600041 (IN)
(86) Internationale Anmeldenummer: PCT/EP2017/056287
(87) Internationale Veröffentlichungsnummer: WO 2017/178187

(56) Entgegenhaltungen:
- WO-A1-2011/070645
- DE-A1- 10 048 418
- DE-T5-112012 007 213
- US-A1- 2006 204 347
- US-A1- 2009 105 906

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Gierbewegungen bzw. Schlingern bzw. Querschwingungen oder Seitenschlag können eine Stabilität eines Fahrzeugs betreffen. Ursachen solcher Bewegungen können verschiedenartig sein, wie beispielsweise Umweltbedingungen, ein Fahrzeugzustand, ein Fahrerverhalten usw. Eine weitere Ursache von Gierbewegungen bzw. Schlingern kann ein Fahren mit einem Anhänger sein.

Die WO 2011/042966 A1 beschreibt eine Vorrichtung zum Erfassen eines Schlingerzustands von Fahrzeuggespannen und eine Verhaltenssteuervorrichtung.

Aus dem Stand der Technik ist weiterhin die Schrift US 2006/204347 A1 bekannt. Diese Schrift betrifft ein Verfahren zum Stabilisieren eines Gespanns, mit einem Zugfahrzeug und einem durch das Zugfahrzeug bewegten Anhänger, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden. Durch die Schritte, Ermitteln und Bewerten von den Schlingerbewegungen im Hinblick auf kritische oder unkritische Fahrzustände und Verzögern des Zugfahrzeugs in Abhängigkeit von den Amplituden der Schlingerbewegungen.

Aus dem Stand der Technik ist ebenfalls die Schrift DE 100 48 418 A1

### Offenbarung der Erfindung

Vor diesem Hintergrund werden mit dem hier vorgestellten Ansatz ein Verfahren, weiterhin eine Vorrichtung, welche dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im nebengeordneten Anspruch angegebenen Vorrichtung möglich.

Gemäß Ausführungsformen kann eine Detektion eines Schlingerns bzw. eines Seitenschlags bzw. einer Gierbewegung eines Fahrzeugs insbesondere auf Basis einer Fahrbahnkrümmung realisiert werden. Beispielsweise kann eine sicherheitskritische Gierbewegung eines Fahrzeugs unter Verwendung einer Analyse einer erfassten Abweichung von einem vorausberechneten Kurs des Fahrzeugs bestimmt werden.

Vorteilhafterweise kann gemäß Ausführungsformen insbesondere ein Seitenschlag bzw. Gieren, das zum Beispiel durch einen Anhänger bewirkt sein kann, zuverlässig erfasst werden, selbst wenn das Fahrzeug aktiv durch den Fahrer oder eine hochautomatisierte Fahrfunktion gelenkt wird. Durch eine solche Erfassung von Gierbewegungen bzw. Schlingern oder Seitenschlag kann beispielsweise ein Fahrzeug rechtzeitig, einfach und sicher stabilisiert werden.

Es wird ein Verfahren zum Bestimmen einer sicherheitskritischen Gierbewegung eines Fahrzeugs vorgestellt, wobei das Verfahren folgende Schritte aufweist:
Vergleichen eines Vorgabesignals, das eine ermittelte Soll-Gierrate des Fahrzeugs bezogen auf eine voraussichtliche Trajektorie des Fahrzeugs repräsentiert, mit einem Messsignal, das eine aufgrund einer tatsächlichen Trajektorie des Fahrzeugs gemessene Ist-Gierrate des Fahrzeugs repräsentiert, um ein Vergleichssignal zu erzeugen;
Überprüfen des Vergleichssignals dahin gehend, ob eine Amplitude des Vergleichssignals einen ersten Schwellenwert überschreitet, um bei einem Überschreiten des ersten Schwellenwerts ein Prüfsignal bereitzustellen;
Untersuchen des Vergleichssignals dahin gehend, ob eine Frequenz des Vergleichssignals einen zweiten Schwellenwert überschreitet, ansprechend auf das Prüfsignal, um bei einem Überschreiten des zweiten Schwellenwerts ein Untersuchungssignal bereitzustellen; und
Bereitstellen eines Gierbewegungssignals, das die sicherheitskritische Gierbewegung des Fahrzeugs repräsentiert, ansprechend auf das Untersuchungssignal.

Dieses Verfahren kann beispielsweise in Software oder Hardware oder in einer Mischform aus Software und Hardware beispielsweise in einem Steuergerät implementiert sein. Eine sicherheitskritische Gierbewegung kann eine Fahrsicherheit, einen Fahrkomfort oder dergleichen beeinflussen. Das Vorgabesignal und zusätzlich oder alternativ das Messsignal kann oder können auch eine Querbeschleunigung des Fahrzeugs relativ zu einer Fahrtrichtung repräsentieren. Das Verfahren, insbesondere das Gierbewegungssignal, kann für Spurhaltefunktionen oder andere Lenksteuerfunktionen zur Stabilisierung des Fahrzeugs verwendet werden.

Gemäß einer Ausführungsform können im Schritt des Überprüfens unter Verwendung einer Ableitung eines Signalverlaufs des Vergleichssignals Extremstellen des Signalverlaufs des Vergleichssignals überprüft werden. Unter Verwendung der Extremstellen kann eine Amplitude des Vergleichssignals ermittelt werden. Unter einer Ableitung kann vorliegend das Ergebnis eines einoder mehrmaligen Differenzierens bzw. Ableitens des Signalverlaufs verstanden werden. Eine solche Ausführungsform bietet den Vorteil, dass eine Überschreitung des ersten Schwellenwertes bzw. eine sicherheitskritische Kursabweichung des Fahrzeugs auf einfache und schnelle Weise erkannt werden kann.

Auch können im Schritt des Untersuchens unter Verwendung einer Ableitung eines Signalverlaufs des Vergleichssignals Wendestellen des Signalverlaufs des Vergleichssignals untersucht werden. Hierbei kann eine Anzahl von auftretenden Wendestellen innerhalb eines Zeitintervalls untersucht werden. Unter Verwendung der Wendestellen kann eine Frequenz des Vergleichssignals ermittelt werden. Der zweite Schwellenwert kann auf eine Anzahl von auftretenden Wendestellen innerhalb eines Zeitintervalls bezogen sein. Eine solche Ausführungsform bietet den Vorteil, dass eine Überschreitung des zweiten Schwellenwertes bzw. eine sicherheitskritische Gierbewegung des Fahrzeugs auf einfache und zuverlässige Weise erkannt werden kann.

Insbesondere kann im Schritt des Vergleichens eine Differenz des Vorgabesignals und des Messsignals gebildet werden. Dabei kann das Vergleichssignal ein Differenzsignal repräsentieren. Eine solche Ausführungsform bietet den Vorteil, dass eine möglicherweise sicherheitskritische Kursabweichung des Fahrzeugs anhand einer Schwingung bzw. eines Ausschlags des Differenzsignals einfach, schnell und sicher erkannt werden kann.

Ferner kann das Verfahren einen Schritt des Einlesens von Trajektoriendaten von einer Schnittstelle zu mindestens einem Umfeldsensor des Fahrzeugs aufweisen. Hierbei können die Trajektoriendaten die voraussichtliche Trajektorie des Fahrzeugs repräsentieren. Der mindestens eine Umfeldsensor kann eine Fahrzeugkamera, insbesondere eine Videokamera, eine Radarvorrichtung oder dergleichen aufweisen. Eine solche Ausführungsform bietet den Vorteil, dass auf einer solchen Datengrundlage die voraussichtliche Trajektorie des Fahrzeugs genau und zuverlässig ermittelt werden kann.

Zudem kann das Verfahren einen Schritt des Ermittelns einer Soll-Gierrate des Fahrzeugs unter Verwendung von Trajektoriendaten von einer Schnittstelle zu mindestens einem Umfeldsensor des Fahrzeugs aufweisen, um das die Soll-Gierrate repräsentierende Vorgabesignal zu erzeugen. Dabei können die Trajektoriendaten die voraussichtliche Trajektorie des Fahrzeugs repräsentieren. Eine solche Ausführungsform bietet den Vorteil, dass die Soll-Gierrate des Fahrzeugs zur Verwendung bei dem Verfahren exakt und sicher ermittelt werden kann.

Gemäß einer Ausführungsform können die Trajektoriendaten mittels mindestens eines Umfeldsensors des Fahrzeugs erfasste Bilddaten, Videodaten und zusätzlich oder alternativ Radardaten sein, die einen Fahrbahnverlauf einer Fahrbahn des Fahrzeugs, eine Fahrbahnkrümmung einer Fahrbahn des Fahrzeugs und zusätzlich oder alternativ Spurmarkierungen einer Fahrbahn des Fahrzeugs repräsentieren können. Unter Verwendung des Fahrbahnverlaufs, der Fahrbahnkrümmung bzw. einem Krümmungswinkel der Fahrbahn und zusätzlich oder alternativ Positionen der Spurmarkierungen kann die Soll-Gierrate des Fahrzeugs ermittelt werden. Eine solche Ausführungsform bietet den Vorteil, dass eine aussagekräftige und zuverlässige Datengrundlage zur Ermittlung der Soll-Gierrate des Fahrzeugs bereitgestellt werden kann.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuerund/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Bestimmung einer möglicherweise sicherheitskritischen Bewegung des Fahrzeugs um eine Hochachse des Fahrzeugs. Hierzu kann die Vorrichtung beispielsweise auf Sensorsignale wie Bildsignale, Videosignale und zusätzlich oder alternativ Radarsignale zugreifen. Eine Ansteuerung einer Assistenzfunktion, Sicherheitsfunktionen oder dergleichen erfolgt beispielsweise über Aktoren, die ausgebildet sind, um einen Lenkwinkel des Fahrzeugs zu beeinflussen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Vergleichsdarstellung von Bewegungen eines Fahrzeugs gemäß einem Ausführungsbeispiel;
Fig. 2 eine schematische Darstellung einer Vorrichtung gemäß einem Ausführungsbeispiel in einem Fahrzeug;
Fig. 3 ein Ablaufdiagramm eines Verfahrens gemäß einem Ausführungsbeispiel;
Fig. 4 ein Ablaufdiagramm eines Teilabschnittes eines Bestimmungsprozesses gemäß einem Ausführungsbeispiel;
Fig. 5 ein Ablaufdiagramm eines Teilabschnittes eines Bestimmungsprozesses gemäß einem Ausführungsbeispiel; und
Fig. 6 ein Signalverlaufsdiagramm von Signalen gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

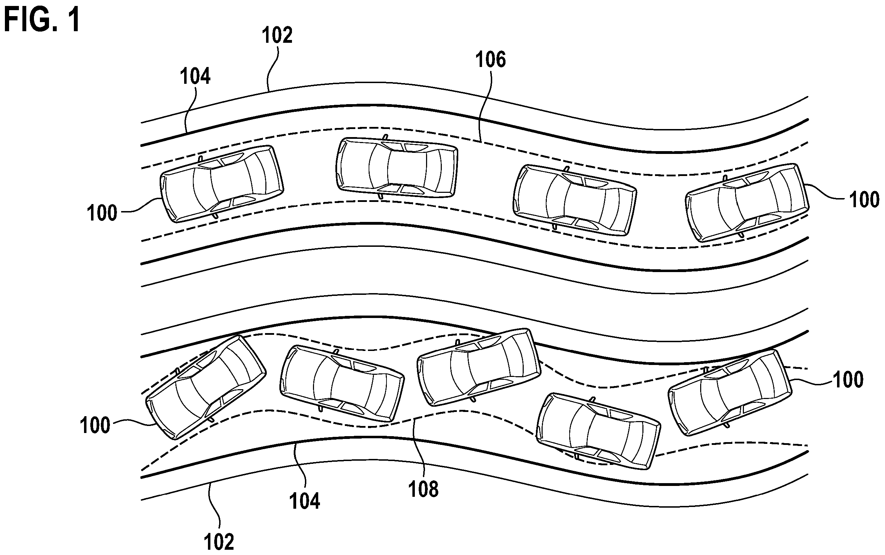

Fig. 1 zeigt eine schematische Vergleichsdarstellung von Bewegungen eines Fahrzeugs 100 gemäß einem Ausführungsbeispiel. Das Fahrzeug 100 ist hierbei zum Veranschaulichen einer Bewegung mehrfach dargestellt. Das Fahrzeug 100 ist in Fig. 1 in zwei unterschiedlichen Bewegungszuständen auf einer Fahrbahn 102 gezeigt, die durch Spurmarkierungen 104 markiert ist. Die Fahrbahn 102 und die Spurmarkierungen 104 weisen hierbei einen gekrümmten Verlauf auf.

Die Darstellung in Fig. 1 ist zweigeteilt und weist eine obere Teildarstellung und eine untere Teildarstellung auf. In der oberen Teildarstellung folgt eine erste Trajektorie 106 des Fahrzeugs 100 einem Verlauf der Fahrbahn 102 bzw. der Spurmarkierungen 104. Anders ausgedrückt repräsentiert die obere Teildarstellung eine Darstellung eines normal fahrenden Fahrzeugs 100. In der unteren Teildarstellung weist das Fahrzeug 100 eine zweite Trajektorie 108 auf, die relativ zu dem Verlauf der Fahrbahn 102 bzw. den Spurmarkierungen 104 mehrfach gekrümmt ist. Genauer gesagt repräsentiert die untere Teildarstellung eine Darstellung des Fahrzeugs 100 unter Einfluss von Schlingern oder Seitenschlag bzw. unter Einfluss einer sicherheitskritischen Gierbewegung.

Anders ausgedrückt repräsentiert die erste Trajektorie 106 des Fahrzeugs 100 eine voraussichtliche Trajektorie des Fahrzeugs 100, wobei die zweite Trajektorie 108 eine tatsächliche Trajektorie des Fahrzeugs 100 repräsentiert. Ein Unterschied zwischen der ersten Trajektorie 106 und der zweiten Trajektorie 108 ergibt sich aufgrund der sicherheitskritischen Gierbewegung, welche das Fahrzeug 100 schlingern lässt.

Ursachen einer sicherheitskritischen Gierbewegung können verschiedenartig sein, wie beispielsweise Umweltbedingungen (verringerte Reibung, Spurrinnen und Rillen, Kies, Aquaplaning und Seitenwind), ein Fahrzeugzustand (schlechte Bereifung und Aufhängung, unterschiedlicher Reifendruck und nicht ordnungsgemäße Radauswuchtung) und ein Fahrerverhalten (Lenkmanöver und Bremsmanöver bei Notfällen und automatische Lenksteuersysteme) usw. Eine weitere Ursache von Gierbewegungen bzw. Schlingern oder Seitenschlag kann ein Fahren mit einem Anhänger (besonders ein schwerer Bootsanhänger mit ungleicher Last) sein.

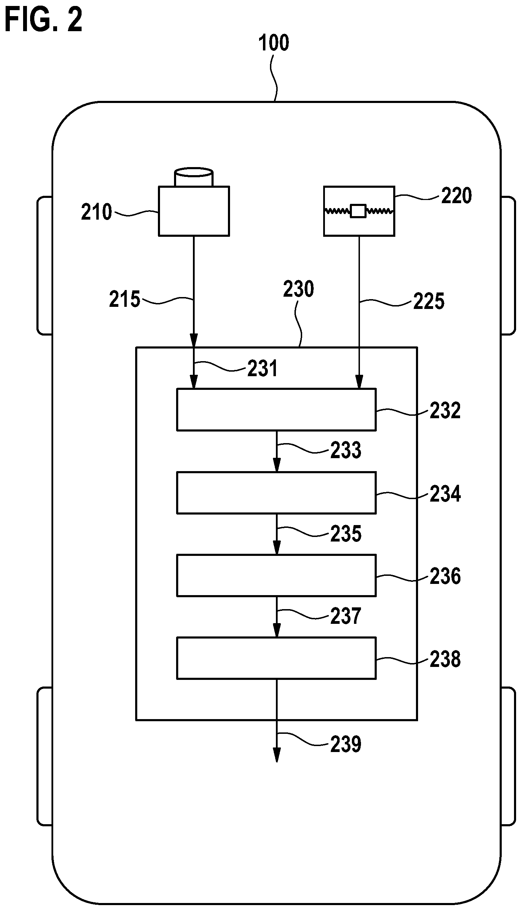

Fig. 2 zeigt eine schematische Darstellung einer Vorrichtung 230 gemäß einem Ausführungsbeispiel in einem Fahrzeug 100. Bei dem Fahrzeug 100 handelt es sich um das Fahrzeug aus Fig. 1 oder ein ähnliches Fahrzeug. Das Fahrzeug 100 ist lediglich beispielhaft ein Personenkraftwagen, ein Lastkraftwagen oder ein anderes Nutzfahrzeug.

Das Fahrzeug 100 weist beispielhaft lediglich einen Umfeldsensor 210, einen Gierratensensor 220 und eine Bestimmungsvorrichtung 230 bzw. Vorrichtung 230 zum Bestimmen einer sicherheitskritischen Gierbewegung des Fahrzeugs 100 auf. Dabei sind der Umfeldsensor 210 und der Gierratensensor 220 signalübertragungsfähig, beispielsweise über zumindest eine drahtgebundene oder drahtlose Schnittstelle, mit der Bestimmungsvorrichtung 230 verbunden.

Der Umfeldsensor 210 ist gemäß dem in Fig. 2 dargestellten Ausführungsbeispiel als eine Fahrzeugkamera, insbesondere eine Videokamera ausgeführt. Der Umfeldsensor 210 ist ausgebildet, um ein Umfeld des Fahrzeugs 100 zu erfassen. Der Umfeldsensor 210 ist ausgebildet, um Trajektoriendaten 215 bereitzustellen. Die Trajektoriendaten 215 repräsentieren einen Fahrbahnverlauf einer Fahrbahn des Fahrzeugs 100, eine Fahrbahnkrümmung einer Fahrbahn des Fahrzeugs 100 und/oder Spurmarkierungen einer Fahrbahn des Fahrzeugs 100. Anders ausgedrückt repräsentieren die Trajektoriendaten 215 eine voraussichtliche Trajektorie des Fahrzeugs 100.

Der Gierratensensor 220 ist ausgebildet, um eine Gierrate des Fahrzeugs 100 zu erfassen. Anders ausgedrückt ist der Gierratensensor 220 ausgebildet, um eine Bewegung bzw. Beschleunigung des Fahrzeugs 100 um eine Hochachse des Fahrzeugs 100 zu erfassen. Optional kann der Gierratensensor 220 ausgebildet sein, um eine Querbeschleunigung des Fahrzeugs 100 zu erfassen. Der Gierratensensor 220 ist ausgebildet, um ein Messsignal 225 bereitzustellen. Das Messsignal 225 repräsentiert eine aufgrund einer tatsächlichen Trajektorie des Fahrzeugs 100 gemessene Ist-Gierrate des Fahrzeugs 100.

Die Bestimmungsvorrichtung 230 ist ausgebildet, um die Trajektoriendaten 215 von dem Umfeldsensor 210 bzw. von einer Schnittstelle zu dem Umfeldsensor 210 einzulesen. Auch ist die Bestimmungsvorrichtung 230 ausgebildet, um das Messsignal 225 von dem Gierratensensor 220 bzw. von einer Schnittstelle zu dem Gierratensensor 220 einzulesen.

Gemäß dem in Fig. 2 gezeigten Ausführungsbeispiel ist die Bestimmungsvorrichtung 230 ferner ausgebildet, um unter Verwendung der Trajektoriendaten 215 eine Soll-Gierrate des Fahrzeugs 100 bezogen auf eine voraussichtliche Trajektorie des Fahrzeugs 100 zu ermitteln und ein die Soll-Gierrate repräsentierendes Vorgabesignal 231 zu erzeugen.

Die Bestimmungsvorrichtung 230 weist eine Vergleichseinrichtung 232, eine Überprüfungseinrichtung 234, eine Untersuchungseinrichtung 236 und eine Bereitstellungseinrichtung 238 auf. Die Vergleichseinrichtung 232 ist ausgebildet, um das Vorgabesignal 231 mit dem Messsignal 225 zu vergleichen, um ein Vergleichssignal 233 zu erzeugen. Die Überprüfungseinrichtung 234 ist ausgebildet, um das Vergleichssignal 233 dahin gehend zu überprüfen, ob eine Amplitude des Vergleichssignals 233 einen ersten Schwellenwert überschreitet, um bei einem Überschreiten des ersten Schwellenwerts ein Prüfsignal 235 bereitzustellen. Somit ist die Überprüfungseinrichtung 234 ausgebildet, um bei einem Überschreiten des ersten Schwellenwerts durch die Amplitude des Vergleichssignals 233 das Prüfsignal 235 bereitzustellen. Die Untersuchungseinrichtung 236 ist ausgebildet, um ansprechend auf das Prüfsignal 235 bzw. ein Vorliegen des Prüfsignals 235 das Vergleichssignal 233 dahin gehend zu überprüfen, ob eine Frequenz des Vergleichssignals 233 einen zweiten Schwellenwert überschreitet, um bei einem Überschreiten des zweiten Schwellenwerts ein Untersuchungssignal 237 bereitzustellen. Somit ist die Untersuchungseinrichtung 236 ausgebildet, um bei einem Überschreiten des zweiten Schwellenwerts durch die Frequenz des Vergleichssignals 233 das Untersuchungssignal 237 bereitzustellen. Die Bereitstellungseinrichtung 238 ist ausgebildet, um ansprechend auf das Untersuchungssignal 237 ein Gierbewegungssignal 239 bereitzustellen, welches die sicherheitskritische Gierbewegung des Fahrzeugs repräsentiert.

Somit ist die Bestimmungsvorrichtung 230 ausgebildet, um unter Verwendung der Trajektoriendaten 215 und des Messsignals 225 das Gierbewegungssignal 239 zu erzeugen. Das Gierbewegungssignal 239 kann zumindest einem Steuergerät des Fahrzeugs 100, einem Assistenzsystem des Fahrzeugs 100 und dergleichen bereitgestellt werden, um eine Stabilität des Fahrzeugs 100 zu erhöhen oder zumindest wiederherzustellen.

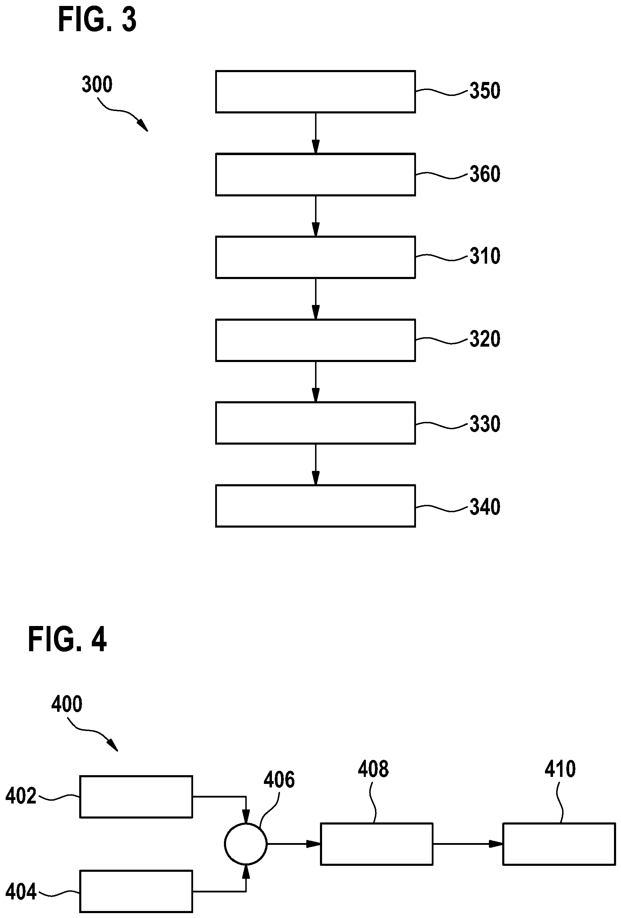

Fig. 3 zeigt ein Ablaufdiagramm eines Verfahrens 300 zum Bestimmen gemäß einem Ausführungsbeispiel. Das Verfahren 300 zum Bestimmen ist ausführbar, um eine sicherheitskritische Gierbewegung eines Fahrzeugs bestimmen. Dabei ist das Verfahren 300 zum Bestimmen in Verbindung mit dem Fahrzeug aus Fig. 1 bzw. Fig. 2 oder einem ähnlichen Fahrzeug und/oder in Verbindung mit der Bestimmungsvorrichtung aus Fig. 2 oder einer ähnlichen Vorrichtung ausführbar.

In einem Schritt 310 des Vergleichens wird bei dem Verfahren 300 zum Bestimmen ein Vorgabesignal mit einem Messsignal verglichen, um ein Vergleichssignal zu erzeugen. Dabei repräsentiert das Vorgabesignal eine ermittelte Soll-Gierrate des Fahrzeugs bezogen auf eine voraussichtliche Trajektorie des Fahrzeugs. Das Messsignal repräsentiert eine aufgrund einer tatsächlichen Trajektorie des Fahrzeugs gemessene Ist-Gierrate des Fahrzeugs. Das Vergleichssignal wird in einem Schritt 320 des Überprüfens dahin gehend überprüft, ob eine Amplitude des Vergleichssignals einen ersten Schwellenwert überschreitet, um bei einem Überschreiten des ersten Schwellenwerts ein Prüfsignal bereitzustellen. Ansprechend auf das Prüfsignal wird in einem Schritt 330 des Untersuchens dann das Vergleichssignal dahin gehend untersucht, ob eine Frequenz des Vergleichssignals einen zweiten Schwellenwert überschreitet, um bei einem Überschreiten des zweiten Schwellenwerts ein Untersuchungssignal bereitzustellen. Ansprechend auf das Untersuchungssignal bzw. bei einem Überschreiten des ersten Schwellenwerts und bei einem Überschreiten des zweiten Schwellenwerts wird in einem Schritt 340 des Bereitstellens ein Gierbewegungssignal bereitgestellt, das die sicherheitskritische Gierbewegung des Fahrzeugs repräsentiert.

Gemäß einem Ausführungsbeispiel weist das Verfahren 300 auch einen Schritt 350 des Einlesens und/oder einen Schritt 360 des Ermittelns auf. Im Schritt 350 des Einlesens werden Trajektoriendaten von einer Schnittstelle zu mindestens einem Umfeldsensor des Fahrzeugs eingelesen. Die Trajektoriendaten repräsentieren die voraussichtliche Trajektorie des Fahrzeugs. Im Schritt 360 des Ermittelns wird eine Soll-Gierrate des Fahrzeugs unter Verwendung von Trajektoriendaten von einer Schnittstelle zu mindestens einem Umfeldsensor des Fahrzeugs ermittelt, um das die Soll-Gierrate repräsentierende Vorgabesignal zu erzeugen.

Fig. 4 zeigt ein Ablaufdiagramm 400 eines Teilabschnittes eines Bestimmungsprozesses gemäß einem Ausführungsbeispiel. Der Bestimmungsprozess ist in Verbindung mit dem Verfahren aus Fig. 3 oder einem ähnlichen Verfahren bzw. unter Verwendung der Bestimmungsvorrichtung und/oder des Fahrzeugs aus Fig. 2 oder ähnlichen ausführbar. Der in Fig. 4 gezeigte Teilabschnitt des Bestimmungsprozesses betrifft einen ersten Schritt des Bestimmungsprozesses bzw. eine Bestimmung einer Amplitude einer Gierbewegung bzw. von Schlingern oder Seitenschlag.

Bei dem in Fig. 4 dargestellten Teilabschnitt des Bestimmungsprozesses werden Querbeschleunigungen eines Fahrzeugs verwendet, wobei eine Querbeschleunigung mit einer Gierrate des Fahrzeugs verknüpft bzw. korreliert ist. Ein Block 402 repräsentiert ein Erfassen einer Querbeschleunigung bzw. tatsächlichen Querbeschleunigung eines Fahrzeugs. Ein Block 404 repräsentiert ein Ermitteln einer idealen bzw. voraussichtlichen Querbeschleunigung des Fahrzeugs. In einem Block 406 werden der Block 402 und der Block 404 zusammengeführt bzw. kombiniert. Gemäß dem in Fig. 4 gezeigten Ausführungsbeispiel wird in dem Block 406 eine Differenz zwischen Querbeschleunigung und idealer Querbeschleunigung gebildet. Von dem Block 406 gelangt der Bestimmungsprozess zu einem Block 408, bei dem eine Amplitude der Gierbewegung bzw. des Schlingerns bzw. eine SeitenschlagAmplitude bestimmt wird. Nachfolgend gelangt der Bestimmungsprozess zu einem Block 410, in dem eine Ableitung der Seitenschlag-Amplitude gebildet wird.

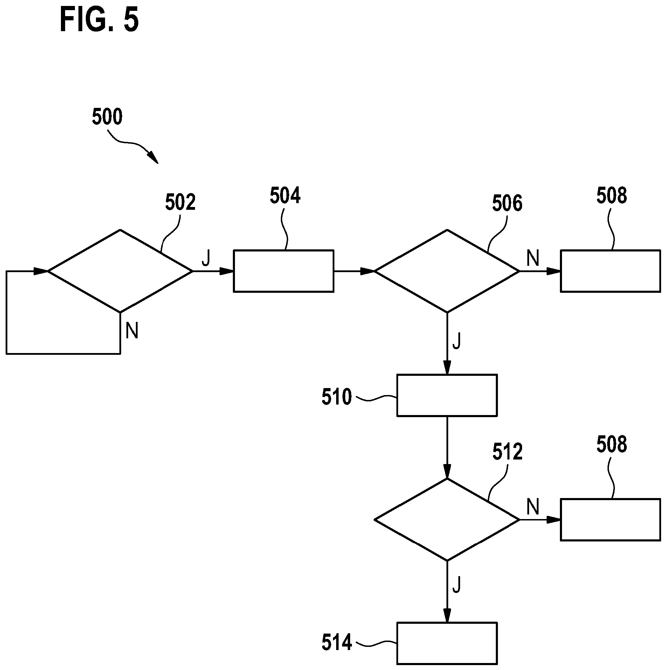

Fig. 5 zeigt ein Ablaufdiagramm 500 eines Teilabschnittes eines Bestimmungsprozesses gemäß einem Ausführungsbeispiel. Dabei ist der in Fig. 5 dargestellte Teilabschnitt des Bestimmungsprozesses in Verbindung mit dem in Fig. 4 gezeigten Teilabschnitt des Bestimmungsprozesses bzw. als Fortsetzung des dort gezeigten Teilabschnittes ausführbar. Der Bestimmungsprozess ist in Verbindung mit dem Verfahren aus Fig. 3 oder einem ähnlichen Verfahren bzw. unter Verwendung der Bestimmungsvorrichtung und/oder des Fahrzeugs aus Fig. 2 oder ähnlichen ausführbar. Der in Fig. 5 gezeigte Teilabschnitt des Bestimmungsprozesses betrifft einen zweiten Schritt des Bestimmungsprozesses bzw. eine Analyse einer Gierbewegung bzw. von Schlingern oder Seitenschlag.

In einem Block 502 wird überprüft, ob die Seitenschlagamplitude höher als eine Schwelle bzw. ein Schwellenwert ist. Falls dies nicht der Fall ist, wird der Block 502 bei dem Bestimmungsprozess in einer Schleife wiederholt. Falls die Seitenschlagamplitude höher als die Schwelle ist, geht der Bestimmungsprozess zu einem Block 504 über, bei dem eine erste Ableitungsprüfung durchgeführt wird. Danach geht der Bestimmungsprozess zu einem Block 506 über, bei dem festgestellt wird, ob ein kritischer Punkt bzw. lokale Maxima oder Minima auftritt oder auftreten. Falls dem nicht so ist, geht der Bestimmungsprozess zu einem Block 508 über, bei dem eine Analyse fortgesetzt wird. Falls in dem Block 506 festgestellt wird, dass ein kritischer Punkt auftritt bzw. lokale Maxima oder Minima auftreten, geht der Bestimmungsprozess zu einem Block 510 über, bei dem ein Wendepunktzähler ausgeführt wird bzw. laufen gelassen wird. Danach geht der Bestimmungsprozess zu einem Block 512 über, bei dem untersucht wird, ob zwei Wendepunkte innerhalb einer Zeitschwelle auftreten. Falls dem nicht so ist, geht der Bestimmungsprozess zu dem Block 508 über, bei dem die Analyse fortgesetzt wird. Falls in dem Block 512 festgestellt wird, dass zwei Wendepunkte innerhalb einer Zeitschwelle auftreten, dann gelangt der Bestimmungsprozess zu einem Block 514, bei dem ein Seitenschlag bzw. eine Gierbewegung als solche identifiziert wird.

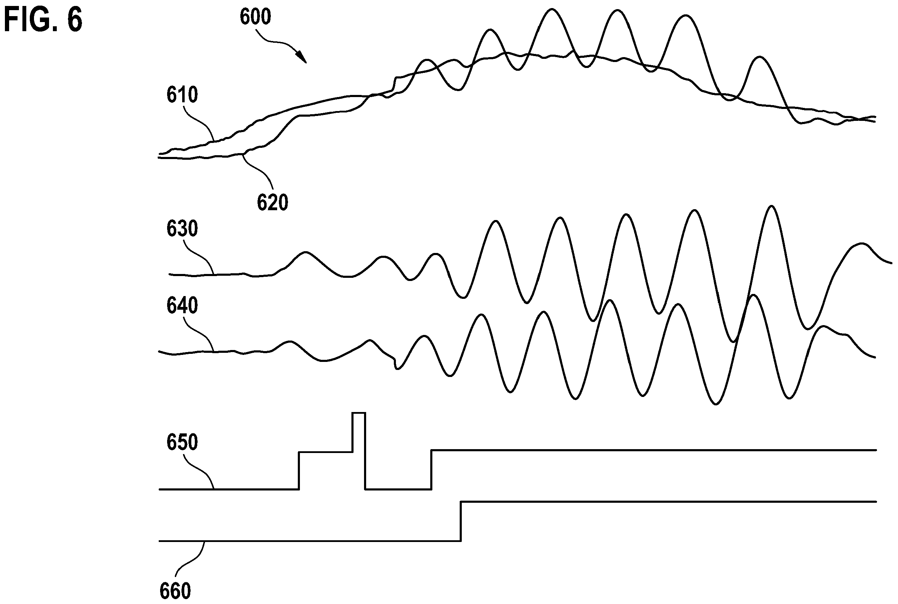

Fig. 6 zeigt ein Signalverlaufsdiagramm 600 von Signalen gemäß einem Ausführungsbeispiel. In dem Signalverlaufsdiagramm 600 sind ein erster Signalverlauf 610, ein zweiter Signalverlauf 620, ein dritter Signalverlauf 630, ein vierter Signalverlauf 640, ein fünfter Signalverlauf 650 und ein sechster Signalverlauf 660 dargestellt. Zumindest eine Teilmenge der Signalverläufe 610 bis 660 ist in Zusammenhang mit der Bestimmungsvorrichtung und/oder dem Fahrzeug aus Fig. 2, in Verbindung mit dem Verfahren aus Fig. 3 und/oder dem Bestimmungsprozess aus Fig. 4 und Fig. 5 oder ähnlichen zu betrachten.

Der erste Signalverlauf 610 repräsentiert eine ideale Querbeschleunigung bzw. die Soll-Gierrate aus Fig. 2. Der zweite Signalverlauf 620 repräsentiert eine Querbeschleunigung oder tatsächliche Querbeschleunigung bzw. die Ist-Gierrate aus Fig. 2. Hierbei weist der zweite Signalverlauf 620 stärkere Ausschläge bzw. Schwingungen als der erste Signalverlauf 610 auf. Der dritte Signalverlauf 630 repräsentiert eine Seitenschlagamplitude bzw. eine Amplitude einer Gierbewegung. Der vierte Signalverlauf 640 repräsentiert eine Rate einer Seitenschlagamplitude bzw. Gierbewegungsamplitude. Der dritte Signalverlauf 630 und der vierte Signalverlauf 640 sind unter Verwendung des ersten Signalverlaufs 610 und des zweiten Signalverlaufs 620 bestimmt. Der erste Signalverlauf 610, der zweite Signalverlauf 620, der dritte Signalverlauf 630 und der vierte Signalverlauf 640 repräsentieren Analogsignale, wobei der fünfte Signalverlauf 650 und der sechste Signalverlauf 660 Digitalsignale repräsentieren. Der fünfte Signalverlauf 650 und der sechste Signalverlauf 660 repräsentieren hierbei Seitenschlagsignale bzw. Gierbewegungssignale. Dabei sind der fünfte Signalverlauf 650 und der sechste Signalverlauf 660 unter Verwendung des ersten Signalverlaufs 610 und des zweiten Signalverlaufs 620 und/oder unter Verwendung des dritten Signalverlaufs 630 und des vierten Signalverlaufs 640 bestimmt.

Unter Bezugnahme auf die Figuren 1 bis 6 werden Ausführungsbeispiele nachfolgend zusammenfassend und mit anderen Worten nochmals erläutert.

Die Bestimmungsvorrichtung 230 bzw. das Verfahren 300 zum Bestimmen nimmt Eingangssignale von dem Umfeldsensor 210, der als eine Videokamera oder ein anderer Sensor ausgeführt ist, der ausgebildet ist, um eine Fahrbahnkrümmung zu erfassen, z. B. ein GPS-Sensor, ein Radarsensor etc., und das Messsignal 225 der tatsächlich erfassten Gierrate des Fahrzeugs 100, um Schlingern oder Seitenschlag genauer zu erfassen. Es kann auch eine Erweiterung vorgesehen sein, um eine Abweichung eines Pfades des Fahrzeugs 100 bezüglich einer Ego-Fahrspur zu erkennen. Auch macht die Verwendung einer lateralen Beschleunigung die Bestimmungsvorrichtung 230 bzw. das Verfahren 300 zum Bestimmen noch empfindlicher für eine Geschwindigkeit, da Schlingern oder Seitenschlag bei höheren Geschwindigkeiten unerwünscht sind.

Bei dem Verfahren 300 zum Bestimmen und/oder bei dem Bestimmungsprozess wird ein Vergleich einer tatsächlichen Bewegung des Fahrzeugs 100 mit einer idealen bzw. voraussichtlichen Trajektorie vorgenommen, um Schlingern oder Seitenschlag zu bestimmen. Ein Fahrzeug 100, das Schlingern oder Seitenschlag zeigt, neigt dazu, um seine Hochachse zu schwingen, wodurch eine Gierbewegung erzeugt wird. Die ideale Gierrate bzw. Soll-Gierrate wird auf Basis einer Krümmung der Fahrbahn 102 berechnet. Die Krümmung der Fahrbahn 102 wird beispielsweise basierend auf einer Spurmarkierungsdetektion mittels einer Videokamera 210 oder anderer Umfeldsensoren 210 bestimmt. Die Soll-Gierrate repräsentiert die Gierrate des Fahrzeugs 100 ohne Schlingern oder Seitenschlag und bei normalen Fahrbedingungen. Eine Abweichung der gemessenen bzw. tatsächlichen Gierrate oder Ist-Gierrate von der Soll-Gierrate wird gemessen und analysiert.

Sicherheitskritische Gierbewegungen bzw. Schlingern oder Seitenschlag bewirken eine Abweichung der Ist-Gierrate des Fahrzeugs 100, die um die Soll-Gierrate schwingt. Eine Differenz zwischen den zwei Signalen 231 und 225 bzw. 610 und 620 liefert ein das Vergleichssignal 233, das meistens nahe Null bleibt, wenn das Fahrzeug 100 der Krümmung der Fahrbahn 102 folgt, und lediglich bei Auftreten von Schlingern oder Seitenschlag schwingt bzw. oszilliert. Es wird beispielsweise eine Ableitungsprüfung durchgeführt, um Maxima und Minima der Schwingung bzw. Oszillation zu bestimmen, die dann basierend auf der Frequenz und der Amplitude der Schwingung analysiert wird. Zwei aufeinanderfolgende Wendepunkte in der ersten Ableitungsprüfung entsprechen einer Schwingung. Wiederholtes Auftreten solcher Schwingungen werden analysiert, um zu bestimmen, ob das Fahrzeug 100 Schlingern oder Seitenschlag bzw. sicherheitskritische Gierbewegungen zeigt.

Schlingern oder Seitenschlag wird tendenziell für einen Fahrer des Fahrzeugs 100 besonders bei höheren Geschwindigkeiten unangenehmer. Daher kann die Verwendung einer Querbeschleunigung bzw. ein Vergleich von gemessener und idealer Querbeschleunigung das Verfahren 300 zum Bestimmen und/oder den Bestimmungsprozess empfindlicher für unangenehme Seitenschlagbewegungen bei höheren Geschwindigkeiten machen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Bestimmen einer sicherheitskritischen Gierbewegung eines Fahrzeugs (100), wobei das Verfahren (300) folgende Schritte aufweist:
Vergleichen (310) eines Vorgabesignals (231), das eine ermittelte Soll-Gierrate des Fahrzeugs (100) bezogen auf eine voraussichtliche Trajektorie (106) des Fahrzeugs (100) repräsentiert, mit einem Messsignal (225), das eine aufgrund einer tatsächlichen Trajektorie (108) des Fahrzeugs (100) gemessene Ist-Gierrate des Fahrzeugs (100) repräsentiert, um ein Vergleichssignal (233) zu erzeugen;
Überprüfen (320) des Vergleichssignals (233) dahin gehend, ob eine Amplitude des Vergleichssignals (233) einen ersten Schwellenwert überschreitet, um bei einem Überschreiten des ersten Schwellenwerts ein Prüfsignal (235) bereitzustellen;
Untersuchen (330) des Vergleichssignals (233) dahin gehend, ob eine Frequenz des Vergleichssignals (233) einen zweiten Schwellenwert überschreitet, ansprechend auf das Prüfsignal (235), um bei einem Überschreiten des zweiten Schwellenwerts ein Untersuchungssignal (237) bereitzustellen; und
Bereitstellen (340) eines Gierbewegungssignals (239), das die sicherheitskritische Gierbewegung des Fahrzeugs (100) repräsentiert, ansprechend auf das Untersuchungssignal (237),
**gekennzeichnet durch** einen Schritt (350) des Einlesens von Trajektoriendaten (215) von einer Schnittstelle zu mindestens einem Umfeldsensor (210) des Fahrzeugs (100), wobei die Trajektoriendaten (215) die voraussichtliche Trajektorie (106) des Fahrzeugs (100) repräsentieren, wobei
die Trajektoriendaten (215) mittels mindestens eines Umfeldsensors (210) des Fahrzeugs (100) erfasste Bilddaten, Videodaten und/oder Radardaten sind, die einen Fahrbahnverlauf einer Fahrbahn (102) des Fahrzeugs (100), eine Fahrbahnkrümmung einer Fahrbahn (102) des Fahrzeugs (100) und/oder Spurmarkierungen (104) einer Fahrbahn (102) des Fahrzeugs (100) repräsentieren.

2. Verfahren (300) gemäß Anspruch 1, **dadurch gekennzeichnet, dass** im Schritt (320) des Überprüfens unter Verwendung einer Ableitung eines Signalverlaufs des Vergleichssignals (233) Extremstellen des Signalverlaufs des Vergleichssignals (233) überprüft werden.

3. Verfahren (300) gemäß einem der vorangegangenen Ansprüche, **dadurch gekennzeichnet, dass** im Schritt (330) des Untersuchens unter Verwendung einer Ableitung eines Signalverlaufs des Vergleichssignals (233) Wendestellen des Signalverlaufs des Vergleichssignals (233) untersucht werden, wobei eine Anzahl von auftretenden Wendestellen innerhalb eines Zeitintervalls untersucht wird.

4. Verfahren (300) gemäß einem der vorangegangenen Ansprüche, **dadurch gekennzeichnet, dass** im Schritt (310) des Vergleichens eine Differenz des Vorgabesignals (231) und des Messsignals (225) gebildet wird, wobei das Vergleichssignal (233) ein Differenzsignal repräsentiert.

5. Verfahren (300) gemäß einem der vorangegangenen Ansprüche, **gekennzeichnet durch** einen Schritt (360) des Ermittelns einer Soll-Gierrate des Fahrzeugs (100) unter Verwendung von Trajektoriendaten (215) von einer Schnittstelle zu mindestens einem Umfeldsensor (210) des Fahrzeugs (100), wobei die Trajektoriendaten (215) die voraussichtliche Trajektorie (106) des Fahrzeugs (100) repräsentieren, um das die Soll-Gierrate repräsentierende Vorgabesignal (231) zu erzeugen.

6. Vorrichtung (230) mit einem Umfeldsensor (210) eines Fahrzeugs (100), die eingerichtet ist, um Schritte des Verfahrens (300) gemäß einem der vorangegangenen Ansprüche in entsprechenden Einheiten (232, 234, 236, 238) auszuführen.

7. Computerprogramm, das dazu eingerichtet ist, das Verfahren (300) gemäß einem der vorangegangenen Ansprüche auszuführen.

8. Maschinenlesbares Speichermedium, auf dem das Computerprogramm nach Anspruch 7 gespeichert ist.

## Claims

1. Method (300) for determining a safety-critical yawing movement of a vehicle (100), wherein the method (300) has the following steps:
comparing (310) a specification signal (231) which represents a determined setpoint yaw rate of the vehicle (100) with respect to an anticipated trajectory (106) of the vehicle (100) with a measurement signal (225) which represents an actual yaw rate of the vehicle (100), measured on the basis of an actual trajectory (108) of the vehicle (100), in order to generate a comparison signal (233) ;
checking (320) the comparison signal (233) to determine whether an amplitude of the comparison signal (233) exceeds a first threshold value, in order to provide a check signal (235) when the first threshold value is exceeded;
examining (330) the comparison signal (233) to determine whether a frequency of the comparison signal (233) exceeds a second threshold value, in response to the check signal (235), in order to provide an examination signal (237) when the second threshold value is exceeded; and
providing (340) a yawing movement signal (239) which represents the safety-critical yawing movement of the vehicle (100), in response to the examination signal (237),
**characterized by** a step (350) of reading in trajectory data (215) from an interface to at least one surroundings sensor (210) of the vehicle (100), wherein the trajectory data (215) represents the anticipated trajectory (106) of the vehicle (100), wherein
the trajectory data (215) is image data, video data and/or radar data acquired by means of at least surroundings sensor (210) of the vehicle (100), which data represents a roadway profile of a roadway (102) of the vehicle (100), a roadway curvature of a roadway (102) of the vehicle (100) and/or lane markings (104) of a roadway (102) of the vehicle (100).

2. Method (300) according to Claim 1, **characterized in that**, in the checking step (320), extreme points of the signal profile of the comparison signal (233) are checked using a derivative of a signal profile of the comparison signal (233).

3. Method (300) according to one of the preceding claims, **characterized in that**, in the examination step (330), inflection points of the signal profile of the comparison signal (233) are examined using a derivative of a signal profile of the comparison signal (233), wherein a number of inflection points which occur are examined within a time interval.

4. Method (300) according to one of the preceding claims, **characterized in that**, in the comparison step (310), a difference is formed between the specification signal (231) and the measurement signal (225), wherein the comparison signal (233) represents a difference signal.

5. Method (300) according to one of the preceding claims, **characterized by** a step (360) of determining a setpoint yaw rate of the vehicle (100) using trajectory data (215) from an interface to at least one surroundings sensor (210) of the vehicle (100), wherein the trajectory data (215) represents the anticipated trajectory (106) of the vehicle (100), in order to generate the specification signal (231) which represents the setpoint yaw rate.

6. Device (230) with a surroundings sensor (210) of a vehicle (100), which device (230) is configured to carry out steps of the method (300) according to one of the preceding claims, in corresponding units (232, 234, 236, 238) .

7. Computer program which is configured to carry out the method (300) according to one of the preceding claims.

8. Machine-readable storage medium in which the computer program according to Claim 7 is stored.

## Revendications

1. Procédé (300) permettant de déterminer un mouvement de lacet, critique pour la sécurité, d'un véhicule (100), le procédé (300) présentant les étapes suivantes consistant à :
comparer (310) un signal spécifié (231) qui représente un taux de lacet théorique établi pour le véhicule (100) par rapport à une trajectoire prévue (106) pour le véhicule (100) avec un signal mesuré
(225) qui représente un taux de lacet réel du véhicule (100), mesuré sur la base d'une trajectoire réelle (108) du véhicule (100) afin de produire un signal de comparaison (233) ;
vérifier (320) le signal de comparaison (233) pour savoir si une amplitude du signal de comparaison (233) dépasse une première valeur seuil afin de fournir un signal de test (235) en cas de dépassement de la première valeur seuil ;
analyser (330) le signal de comparaison (233) pour savoir si une fréquence du signal de comparaison (233) dépasse une deuxième valeur seuil, en réponse au signal de test (235), afin de fournir un signal d'analyse (237) en cas de dépassement de la deuxième valeur seuil ; et
fournir (340) un signal de mouvement de lacet (239) qui représente le mouvement de lacet, critique pour la sécurité, du véhicule (100), en réponse au signal d'analyse (237),
**caractérisé par** une étape (350) de mise en mémoire de données de trajectoire (215) d'une interface à au moins un capteur d'environnement (210) du véhicule (100), les données de trajectoire (215) représentant la trajectoire prévue (106) du véhicule (100), dans lequel
les données de trajectoire (215) représentent des données d'image, des données vidéo et/ou des données radar détectées au moyen d'au moins un capteur d'environnement (210) du véhicule (100) et qui représentent un tracé de voie de circulation d'une voie de circulation (102) du véhicule (100), une courbure de voie de circulation d'une voie de circulation (102) du véhicule (100) et/ou des marquages au sol (104) d'une voie de circulation (102) du véhicule (100).

2. Procédé (300) selon la revendication 1, **caractérisé en ce qu'**à l'étape (320) de vérification, des points extrêmes de la courbe de signal du signal de comparaison (233) sont vérifiés en utilisant une dérivée d'une courbe de signal du signal de comparaison (233) .

3. Procédé (300) selon l'une quelconque des revendications précédentes, caractérisé en ce à l'étape (330) d'analyse, des points d'inflexion de la courbe de signal du signal de comparaison (233) sont analysés en utilisant une dérivée d'une courbe de signal du signal de comparaison (233), un nombre de points d'inflexion apparaissant à l'intérieur d'un intervalle de temps étant analysé.

4. Procédé (300) selon l'une quelconque des revendications précédentes, **caractérisé en ce qu'**à l'étape (310) de comparaison, une différence du signal spécifié (231) et du signal mesuré (225) est formée, le signal de comparaison (233) représentant un signal de différence.

5. Procédé (300) selon l'une quelconque des revendications précédentes, **caractérisé par** une étape (360) d'établissement d'un taux de lacet théorique du véhicule (100) en utilisant des données de trajectoire (215) d'une interface à au moins un capteur d'environnement (210) du véhicule (100), les données de trajectoire (215) représentant la trajectoire prévue (106) du véhicule (100) pour produire le signal spécifié (231) représentant le taux de lacet théorique.

6. Dispositif (230) comprenant un capteur d'environnement (210) d'un véhicule (100), qui est aménagé pour effectuer des étapes du procédé (300) selon l'une quelconque des revendications précédentes dans des unités correspondantes (232, 234, 236, 238).

7. Programme informatique, qui est aménagé pour effectuer le procédé (300) selon l'une quelconque des revendications précédentes.

8. Support de stockage lisible par machine sur lequel est stocké le programme informatique selon la revendication 7.
